## Europäisches Patentamt

## European Patent Office

## Office européen des brevets

(19)

(11) **EP 0 998 510 B1**

(12) **FASCICULE DE BREVET EUROPEEN**

(45) Date de publication et mention
de la délivrance du brevet:
**07.04.2004 Bulletin 2004/15**

(21) Numéro de dépôt: **98941482.6**

(22) Date de dépôt: **29.07.1998**

(51) Int Cl.[7]: **C08G 18/80**, C08G 18/40

(86) Numéro de dépôt international:
**PCT/FR1998/001681**

(87) Numéro de publication internationale:
**WO 1999/006461 (11.02.1999 Gazette 1999/06)**

(54) **COMPOSITION UTILE POUR L'OBTENTION DE REVETEMENT MAT OU SATINE, UTILISATION DE CETTE COMPOSITION ET REVETEMENT AINSI OBTENU**

ZUSAMMENSETZUNG FÜR DIE HERSTELLUNG EINER MATTEN ODER SEIDIGEN BESCHICHTUNG UND DARAUS HERGESTELLTE BESCHICHTUNG

COMPOSITION USEFUL FOR OBTAINING A MATT OR DULL-GLAZED COATING, USE OF SAID COMPOSITION AND RESULTING COATING

(84) Etats contractants désignés:
**AT BE CH CY DE DK ES FI FR GB GR IE IT LI LU MC NL PT SE**

(30) Priorité: **30.07.1997 FR 9709724
30.01.1998 FR 9801270**

(43) Date de publication de la demande:
**10.05.2000 Bulletin 2000/19**

(73) Titulaires:
• **RHODIA CHIMIE**
**92408 Courbevoie Cédex (FR)**
• **Cray Valley Iberica**
**08470 Saint Celoni, Barcelona (ES)**

(72) Inventeurs:
• **BERNARD, Jean-Marie**
**F-69440 Mornant (FR)**
• **WILLIAMS, Francis, John**
**E-08450 Llinars del Valles (ES)**
• **VOGIN, Bernard**
**F-69630 Chaponost (FR)**

(74) Mandataire: **Jacobson, Claude et al
Cabinet Lavoix
2, Place d'Estienne d'Orves
75441 Paris Cedex 09 (FR)**

(56) Documents cités:
**EP-A- 0 680 984        DE-C- 4 430 399
FR-A- 2 266 725        US-A- 4 252 923
US-A- 4 528 355**

Printed by Jouve, 75001 PARIS (FR)

## Description

La présente invention a pour objet une nouvelle famille de compositions comportant des isocyanates masqués et des polyols. Elle concerne plus particulièrement des poudres, y compris des mélanges de poudres, et leur utilisation, notamment sous forme de poudre monocomposant (parfois désignés par leur appellation anglaise "one shot") dans des revêtements au moyen de poudres.

Pour des raisons liées à la protection de l'environnement et à la sécurité du travail, on cherche à éliminer de plus en plus dans les techniques de revêtement, et notamment de peinture, l'utilisation des solvants. Plus particulièrement la diminution des C.O.V (Composés Organiques Volatils) est une préoccupation de plus en plus actuelle dans l'industrie des peintures et vernis. Dans ce but, l'évolution des produits vers de plus hauts extraits secs permet de diminuer les quantités de solvants nécessaires pour atteindre la viscosité d'application, et donc réduire les solvants évaporés lors du séchage du film de peinture.

Une autre alternative est l'utilisation de produits en phase aqueuse où l'eau a remplacé les solvants organiques comme agent véhiculant le liant organique. Toutefois, une faible quantité de solvants organiques est nécessaire à la mise en oeuvre et à la formation du film de peinture. De plus, ils engendrent des résidus solubles dans l'eau dont le traitement peut être délicat et coûteux.

Dans ce contexte, des techniques de revêtement au moyen de poudres se développent de plus en plus. Il convient ici de détailler un peu cette technique pour mieux appréhender la présente invention. La technique met en oeuvre un matériau pulvérulent de très grande finesse pour lequel l'air va jouer le rôle de vecteur.

En général, une charge électrostatique de plusieurs Kilovolts appliquée entre un pistolet et la pièce à peindre va permettre d'attirer et de retenir la poudre précurseur du revêtement, poudre qui sera projetée par le pistolet d'application.

Une cuisson de la pièce entre 150 et 200°C permet alors la fusion, l'étalement puis la réticulation de la poudre de peinture (la peinture est considérée comme le paradigme des revêtements) afin d'obtenir une couche uniforme et homogène du revêtement.

Cette technique est non polluante et présente un rendement d'application voisin de 100% grâce à la possibilité de recyclage de la poudre non utilisée.

Parmi les familles de produits qui peuvent être mises en oeuvre dans ce domaine il convient de mentionner celles qui font l'objet du rappel ci-après :

La majorité du marché est occupée par les peintures poudres dites "hybrides Epoxy-Polyester", suivies des Polyesters et des Polyuréthannes, puis des poudres dites "Epoxy".

Pour obtenir une tenue en extérieur de qualité (notamment vis-à-vis du rayonnement U.V. et de l'humidité), il est impératif d'utiliser les revêtements à base de TGIC-Polyester ou de Polyuréthanne qui, seuls permettent d'atteindre les performances requises.

Les poudres de revêtement peuvent présenter plusieurs aspects de finition (aspect de surface, couleur, brillance, etc.).

La technique utilisée pour atteindre ces effets est différente pour les peintures conventionnelles liquides et les poudres.

Lorsque l'on désire modifier la brillance, l'ajout de certaines charges comme des silices, carbonates de calcium ou de barytes permet de réduire la brillance dans une gamme de 50 à 90%, mais des finitions mates ne peuvent pas être obtenues.

Dans la présente invention, on définit comme système mat ou satiné un revêtement durci, lisse ou structuré qui, appliqué sur un support métallique, présentent un coefficient de réflexion au plus égal à environ 50% sous un angle d'incidence de 60°C.

Les systèmes toutefois les plus difficiles à obtenir correspondent à des revêtements franchement mats, c'est-à-dire présentant une brillance inférieure à environ 30%, pour un angle incident de 60°C ou à environ 40% selon un angle incident de 85°C.

Une des techniques les plus utilisées afin d'obtenir des finitions mates consiste en la combinaison de composés de réactivités très différentes.

Ceci est atteint par le mélange de poudres de peinture possédant des temps de gel court et long. De cette façon, une hétérogénéité microscopique sera obtenue en surface du revêtement, créant ainsi l'effet mat désiré.

D'autres techniques permettent de réduire la brillance des peintures. Elles consistent à utiliser des additifs ou des cires, mais d'une part, elles ne suffisent pas à elles seules et d'autre part lorsqu'elles sont utilisées seules, elles présentent en général des problèmes de reproductibilité et/ou des propriétés mécaniques vraiment insuffisantes, et/ou ne permettent pas d'être utilisées à l'extérieur à cause de leur jaunissement ou de la détérioration du film du fait des intempéries.

Le système le plus utilisé pour l'extérieur est celui connu sous le nom de mélange à sec (parfois désigné par le terme anglo-saxon de "dry-blend"), selon lequel on obtient une faible brillance en malaxant des peintures en poudre extrudées et broyées séparément présentant une réactivité très différente. Outre le fait que ce système prenne du temps et qu'il implique la fabrication (extrusion, broyage, malaxage) de plusieurs peintures, il présente une uniformité réduite du degré de brillance souhaité, ce qui demande des étapes plus nombreuses qu'usuelles et implique des coûts supplémentaires.

Il faut en outre que les composés issus des réactions de réticulation ne soient délétères ni pour la santé humaine ou animale, ni pour l'environnement.

Pour plus de détails sur les techniques de peinture en poudre, on peut se référer aux ouvrages suivants :

→  P. GRANDOU et P. PASTOUR : PEINTURES ET VERNIS :

-  I les constituants
-  Il techniques et industries ; édition Hermann ;

→  R LAMBOURNE :
   Paints and Surface Coatings. Theory and practice; Edition Halsted press;
→  POWDER COATING. THE COMPLETE FINISHER HANDBOOK; the Powder coating institute ;
→  MYERS and LONG :
   TREATISE ON COATINGS, 5 VOLUMES ; Edition Marcel DEKKER.

C'est pourquoi un des buts de la présente invention est de fournir une composition qui permette d'obtenir des revêtements par la technique dite des poudres.

Un des buts de la présente invention est de fournir une composition qui permette d'obtenir des revêtements de bonne résistance aux intempéries.

Un des buts de la présente invention est de fournir une composition qui permette d'obtenir des revêtements mats et/ou satinés.

Un des buts de la présente invention est de fournir une composition du type précédent qui soit de mise en oeuvre aisée.

Les demanderesses ont déposé une demande brevet européen n° 96 401703.2 qui visait une composition qui comportait pour addition successive ou simultanée:

→  un isocyanate au moins partiellement masqué présentant une température de transition vitreuse (parfois désignée par l'abréviation anglo-saxonne Tg) d'au moins environ 20°C, avantageusement d'au moins 40°C) et un taux de libération (vis-à-vis de l'agent masquant) à 120°C d'au plus 5% ;
→  un polyol présentant les caractéristiques suivantes :

♦  une température de transition vitreuse (parfois désignée par l'abréviation anglo-saxonne Tg) au moins égal à environ 40°C, avantageusement au moins égal à environ 50°C ;
♦  un indice d'hydroxyle au moins égal à environ 10 mg/g, avantageusement au moins égal à environ 15 mg/g ;
♦  une masse moléculaire moyenne Mn au moins égale à environ 1000, avantageusement à 2000 g/ mole.

(Dans la présente description le terme "environ" est employé pour mettre en exergue le fait que la valeur est arrondie et que, lorsque le, ou les., chiffres les plus à droite d'un nombre sont des zéros, ces zéros sont des zéros de position et non des chiffres significatifs, sauf bien entendu s'il en est précisé autrement).

Cette composition présentait déjà de gros avantage par rapport à l'état antérieur de la technique.

Les buts ci-dessus et d'autres qui apparaîtront par la suite sont atteints au moyen d'une composition du type précédent, à savoir une composition comportant pour addition successive ou simultanée :

→  un isocyanate au moins partiellement masqué présentant une température de transition vitreuse d'au moins 20° C, avantageusement d'au moins 40° C ;
→  un polyol présentant les caractéristiques suivantes :

♦  une température de transition vitreuse au moins égale à 40° C ;
♦  un indice d'hydroxyle au moins égal à 10 mg/g, avantageusement au moins égal à 15 mg/g ;
♦  une masse moléculaire moyenne Mn au moins égale à 1000 ;

caractérisée par le fait qu'elle comporte en outre au moins 1, avantageusement 2, de préférence 3, des caractéristiques suivantes :

⇒ la présence de fonction carboxylique, avantageusement sous la forme d'isocyanate masqué mixte (voir infra) ;

⇒ la présence de catalyseur d'estérification avantageusement solide et/ou non liposoluble (voir infra) ;

⇒ la présence d'une cire matifiante (voir infra)

et en ce.qu'elle comporte en outre une base organique dont la fonction basique est portée par un atome d'azote ou de phosphore, ledit atome ne portant pas d'hydrogène.

La fonction carboxylique est avantageusement en mélange intime avec la composante isocyanate de la composition. Il est même souhaitable que la fonction carboxylique soit greffée sur le système isocyanate par l'intermédiaire d'un agent portant à la fois une fonction réactive (c'est-à-dire à hydrogène dit mobile) avec la fonction isocyanate et une fonction carboxylique (COOH sous forme de sel ou avantageusement libre). Il est hautement souhaitable que cet agent porteur d'une fonction carboxylique soit un agent de masquage.

Il est préférable que le groupe masquant porte l'hydrogène mobile réagissant avec la fonction isocyanate par l'intermédiaire d'un oxygène pour donner l'enchaînement -NH-CO-O- (c'est-à-dire R-NCO + HO- ---> R-NH-CO-O-).

Selon la présente invention, l'isocyanate est avantageusement masqué par au moins un groupe masquant portant au moins une fonction dérivée des fonctions acide et notamment les fonctions acide et ester. Le masquage peut être mixte et mettre en jeu plusieurs groupes masquant.

Il est souhaitable, notamment pour la matité que dans la structure du ou des isocyanates(s), que la partie du squelette reliant deux fonctions isocyanates comporte au moins un enchaînement polyméthylène $(CH_2)\pi$ où $\pi$ représente un entier de deux à 10, avantageusement de 4 à 8. Cette préférence joue sur la matité et sur les performances mécaniques. Quand il y a plusieurs enchaînements, ces derniers peuvent être semblables ou différents. En outre, il est souhaitable que l'un au moins de préférence tous ces enchaînements soient libres en rotation et donc exocycliques.

Le taux de libération est quantifié par le test à l'octanol (voir infra).

Selon la présente invention, l'isocyanate masqué, pur ou en mélange, est issu d'un polyisocyanate, c'est-à-dire possédant au moins deux fonctions isocyanates, avantageusement plus de deux (possibilités de valeurs fractionnaires puisqu'il s'agit en général de mélange d'oligomères plus ou moins condensés), lequel est lui-même le plus souvent issu d'une précondensation ou d'une prépolymérisation de diisocyanate unitaire (parfois qualifié dans la présente description de "monomère").

D'une manière générale la masse moléculaire moyenne de ces prépolymères ou de ces précondensats est au plus égale à 2000 (un chiffre significatif), plus couramment à 1000 (un chiffre significatif de préférence deux).

Ainsi, parmi les polyisocyanates utilisés pour l'invention, on peut citer ceux du type biuret et ceux dont la réaction de di- ou trimérisation a conduit à des cycles à quatre, cinq ou six chaînons. Parmi les cycles à six on peut citer les cycles isocyanuriques issus d'une homo- ou d'une hétéro-trimèrisation de divers diisocyanates seuls, avec d'autre isocyanate(s) [mono-, di--, ou polyisocyanate(s)] ou avec du gaz carbonique (ou bioxyde de carbone), dans ce cas on remplace un azote du cycle isocyanurique par un oxygène. Les oligomères à cycles isocyanuriques sont préférés.

Les polyisocyanates préférés sont ceux qui présentent au moins une fonction isocyanate aliphatique. En d'autres termes, au moins une fonction isocyanate masquée selon l'invention est reliée au squelette par l'intermédiaire d'un carbone de type sp$^3$ portant avantageusement un atome d'hydrogène, de préférence deux. Il est souhaitable que ledit carbone de type sp$^3$ soit lui-même porté par un carbone de type sp$^3$ et avantageusement muni d'un, de préférence de deux atomes d'hydrogène, et ce pour éviter que la fonction isocyanate considérée soit en position néopentylique. En d'autres termes, il est conseillé de choisir comme monomère (lesquels sont, en général, porteurs de deux fonctions isocyanate) au moins un composé qui porte au moins une fonction aliphatique qui ne soit ni secondaire ou tertiaire, ni néopentylique.

En cas de mélange obtenu à partir de plusieurs (en général, deux) types de monomères, il est préférable que celui ou ceux des monomères qui répondent aux conditions ci-dessus et/ou (avantageusement "et") à la condition sur la présence d'enchaînement polyméthylène $(CH_2)\pi$ représentent au moins 1/3, avantageusement 1/2, de préférence 2/3 des fonctions isocyanates masquées. Ainsi au cours de l'étude selon la présente invention, il a été obtenu d'excellents résultats avec des mélanges comportant 2/3 d'HMDT ("trimère" d'Hexa-méthylène diisocyanate) avec de l'IPDI ou de l'IPDT ("trimère" d'IPDI) les deux étant masqués selon l'invention (le nBDI, norbornane diisocyanate, et son trimère sont similaires).

On préfère bien sûr le cas où la totalité des isocyanates sont aliphatiques, et même répondent au critère ci-dessus.

Les agents conduisant au(x) groupe(s) masquant(s) caractéristique(s) de l'invention sont avantageusement choisis parmi ceux qui sont issus de la condensation d'un dérivé aromatique hydroxylé sur le noyau et portant une fonction choisie parmi les fonctions nitriles, et de préférence carbonyles avec un isocyanate. Il va sans dire que la condensation se fait sur la fonction phénol.

Il convient de choisir parmi les membres de cette famille ceux pour lesquels il est possible de déterminer un point de fusion apparent, cette mesure étant réalisée à température ambiante (20°C). Ce point de fusion doit être au moins égal à 30°C (un chiffre significatif) avantageusement à 50°C.

Il est préférable de choisir parmi ceux des la formule (I) :

$$Ar(R)_n(Y-Z)_m(OH)_p \hspace{4cm} (I)$$

où Ar est un reste aromatique sur lequel est greffé n substituants R, m fonctions polaires Z choisies parmi les nitriles et les groupements carbonyles, et p fonctions hydroxyles.

Les valeurs de n, m et p sont telles que la somme n + m + p soit au plus égale au nombre de sommets substituables, avantageusement p est au plus égal à 2, de préférence il est égal à 1.

Avantageusement m est au plus égal à 2, de préférence m est égal à 1.

Avantageusement n est au plus égal à 3, de préférence choisi parmi zéro, 1 et 2, plus préférentiellement égal à zéro.

R représente des substituants indifférents pour la réaction de masquage et en général correspond à des chaînes hydrocarbonées, le plus souvent des chaînes alcoyles au sens étymologique du terme, à savoir un alcool auquel on a enlevé sa fonction hydroxyle.

Deux substituants vicinaux R peuvent être reliés entre eux pour former un cycle qui peut être aromatique par exemple.

Z est avantageusement choisi parmi les groupements présentant une fonction carbonyle. Parmi ces fonctions, il convient de citer les fonctions alcoxycarbonyles (ou en d'autres termes les fonctions esters), la fonction amide, la fonction cétone avec la condition préférentielle qu'il n'y ait pas d'hydrogène acide [en d'autres termes la fonction n'est avantageusement pas porteuse d'hydrogène ou si elle en porte le pKa correspondant est au moins égale à environ 20 (un chiffre significatif, de préférence 2), plus préférentiellement au moins égale à environ 25] en $\alpha$ de la fonction carbonyle (ester, cétone ou amide). Ainsi les amides (y compris lactame, voire urée) préférés sont avantageusement substitués de préférence suffisamment pour qu'il n'y ait pas d'hydrogène sur l'azote de la fonction amide ou de manière qu'il n'y ait pas d'hydrogène réactif.

Où Y est choisi parmi les groupements divalents, avantageusement -O-, -S-, NR'-,-CR'R"- avec R' et R" choisis parmi les radicaux hydrocarbonés, avantageusement alcoyles, de 1 à 6 atomes de carbone, avantageusement de 1 à 4, de préférence méthyle, plus préférentiellement hydrogène ; et de préférence Y représente une liaison simple.

Il est préférable que la, ou les fonctions polaires Z (en général choisies parmi la fonction nitrile et/ou les fonctions carbonyles) ne soient pas vicinales du groupe Z comme par exemple dans l'acide salicylique.

Le reste aromatique Ar est constitué d'un ou plusieurs noyaux avantageusement condensés, hétéro- ou homocycliques. Il est préférable que Ar ne comporte pas plus de deux noyaux, et de préférence pas plus d'un noyau.

Le reste aromatique Ar peut être constitué d'un ou plusieurs noyaux hétéro-ou homocycliques, le plus souvent homocyclique en raison de leur facilité d'accès. Il convient toutefois de souligner l'intérêt des hétérocycles à 6 chaînons qui présentent une température de libération très inférieure à celle des homocycles correspondants.

Il est souhaitable que le nombre total de carbones du dérivé aromatique hydroxylé sur le noyau soit au plus égal à 20, de préférence à 10 (un chiffre significatif).

Ce noyau est avantageusement à 6 chaînons, les chaînons étant constitués de carbone ou d'azote avec le nombre de substituants nécessaire à la valence de ces atomes.

Parmi les acides et dérivés, notamment esters, donnant les résultats les plus satisfaisants, il convient de citer les acides greffés sur un noyau benzénique, voire sur des noyaux pyridiniques. Ainsi, les acides métahydroxy-, et surtout parahydroxybenzoïques, et leurs dérivés donnent de bons résultats.

Ainsi que cela a été mentionné ci-dessus il est possible de prévoir plusieurs groupes (de préférence deux pour des raisons d'économie) masquant les fonctions isocyanates. Cette diversité peut être réalisée par mélange de divers composés masqués (en général par un seul groupe masquant) ou de préférence par coréaction. Ces groupes masquants peuvent être tous, tels que définis ci-dessus ou bien ne répondre que pour certains d'entre eux à de telles définitions. Dans ce dernier cas, il est préférable que ceux (c'est-à-dire la somme de ceux) qui sont porteurs d'une fonction carbonyle (ester ou acide) répondent avantageusement à la formule ci-dessus (I) et correspondent au moins à environ 10% (exprimée en fonction isocyanate ), avantageusement à environ 20%, de préférence à 1/3.

La présence d'une fonction acide carboxylique (-COOH) et notamment d'une fonction acide carboxylique directement greffée sur un noyau aromatique, avantageusement un noyau benzénique permet d'une part d'augmenter la température de fusion de l'isocyanate bloqué et d'autre part d'augmenter significativement la matité du revêtement après réticulation (Par exemple la peinture finale). Il est toutefois préférable pour préserver les excellentes qualités mécaniques du système selon la présente invention que la quantité de fonction acide présente (en équivalent) soit au plus égale à environ 9/10, avantageusement à environ 4/5, de préférence à 2/3, plus préférentiellement un tiers des fonctions isocyanates. Lorsque les fonction carboxyliques sont portées par des agents qui ne se libèrent pas dans les conditions de cuisson, pour préserver le pouvoir réticulant il est souhaitable que la quantité d'acide portée par des agents qui ne se libère pas, soit au plus de 1/2, avantageusement 1/3 de la totalité des fonctions isocyanates (libres, masquées, liées à un agent masquant non libérable [cf. acide aminocaproique des exemples)])

Les effets fastes des fonctions acides sur la matité et sur la température de transition vitreuse (Tg) se font déjà sentir à partir de 5 % et sont très nettes à partir de 10%, mais il est souhaitable d'atteindre une proportion d'au moins 20% pour obtenir un effet proche de l'inflexion de la courbe. En outre, à ce niveau de concentration et au-delà, les fonctions acides facilitent l'apparition d'irrégularités donnant un aspect dit "structuré". La température de fusion et de la température de transition vitreuse (Tg) croissent continûment avec la teneur en acide jusqu'à 100%.

Dans le cas où l'on se trouve devant un couple ester/acide, et notamment dans le cas où l'on se trouve en face d'un couple hydroxybenzoate d'alcoyle/acide hydroxybenzoïque un bon compromis entre la matité et les diverses propriétés d'usages est déjà obtenu aux alentours du rapport en mole 90/10 ; c'est-à-dire environ 9/10 d'ester et environ 1/10 d'acide.

La présence des fonctions acides à hauteur d'environ 1/10, notamment carboxylique, permet une bonne catalyse de la réticulation.

Les effets exposés ci-dessus des composés isocyanates masqués par deux ou plusieurs agents masquants peuvent être obtenus soit par un mélange de deux ou plusieurs isocyanates masqués par un seul agent masquant soit par des isocyanate masqués simultanément ou successivement par deux ou plusieurs agents masquants. Ce dernier cas donne des résultats meilleurs corrélés à l'existence de molécules dites mixtes c'est-à-dire de molécules dont les fonctions isocyanates sont masquées pour au moins l'une d'entre elles par un porteur de fonction acide et pour au moins l'une d'entre les autres par un non-porteur de fonction acide. Les effets positifs de la présence de ces molécules dites mixtes se font sentir dès qu'elles correspondent (c'est-à-dire qu'elles portent) à environ 5 % des fonction isocyanates, avantageusement 10 %.

Ainsi, une des mises en oeuvre parmi les plus intéressantes consiste à utiliser des isocyanates masqués au moins partiellement par un composé porteur d'une fonction acide, avantageusement par un composé de formule I où Z est une fonction acide. Il est conseillé que l'isocyanate soit alors masqué par un autre groupe que celui porteur de la fonction acide et que la fonction acide du système masquant soit compris entre 90 et 10% (exprimé en fonction isocyanate bloqué). L'autre ou les autres agents masquants peuvent être soit des agents masquants en eux-mêmes connus (répondant aux contraintes de température de libération, ou de démasquage, spécifiée dans la présente description), soit un ester répondant à la formule I. C'est ce dernier terme de l'alternative qui est préféré. Pour les synthèses des ces composés on peut se reporter aux modes opératoires généraux de la demande de brevet N° EP0680 984 A qui donne de bons résultats pour l'opération de masquage (éventuellement partielle) par un composé de la formule 1.

On peut rappeler ici que les agents masquants les plus couramment utilisés sont ceux cités par M. WICKS dans son article "blocked isocyanates"[Progress in Organic Coatings (1975), vol. 3, p. 73]-leur température de déblocage sont avantageusement supérieure à 90°C.

   les agents masquants peuvent se répartir en trois groupes :

   ⇨ ceux dont l'hydrogène mobile est porté par un chalcogène ;
   ⇨ ceux dont l'hydrogène mobile est porté par un azote ;
   ⇨ ceux dont l'hydrogène mobile est porté par carbone.

Parmi ceux dont l'hydrogène mobile est porté par un chalcogène (de préférence légers, à savoir soufre et oxygène), on utilise surtout ceux où le chalcogène est un oxygène ; parmi ces derniers, on peut notamment citer :

-   les produits à séquence >N-OH, comme par exemple les oximes (=N-OH) ou les hydoxy imide ($[-CO-]_2$N-OH) ; et
-   les phénols (lato sensu), surtout ceux dont le noyau aromatique est appauvri en électron tel que les hydroxybenzoate qui sont décrit par la présente invention ;

   on peut également citer les composés décris dans la demande EP-A- 661 278.

Parmi ceux dont l'hydrogène mobile est porté par un azote, on peut notamment citer :

-   les amides monosubstitués, et en particulier les lactames (le plus utilisé est le caprolactame) ;
-   les imides ($[-CO-]_2$N-H), surtout cycliques comme le succinimide ;
-   les hétérocycles azotés insaturés, notamment à cinq chaînons (avantageusement doublement insaturés), comportant de préférence au moins deux hétéroatomes (de préférence azote), parmi ces derniers on peut citer les diazoles (tels les glyoxalines et les pyrazoles), les triazoles, voire les tétrazoles ;
-   On peut également citer les composés décrits dans la demande EP-A- 661 278.

Les agent de masquage dont l'hydrogène mobile est porté par carbone, sont essentiellement des composés de nature malonique, c'est-à-dire un radical RCH< portant deux groupes électroattracteurs (tel que carbonyle, nitrile, Rf ou [perfluoroalcoyle]).

Les agents de masquage (seuls ou en mélange) ci dessus peuvent être utilisé pour la mise en oeuvre de la présente invention dès lors que les deux contraintes suivantes sont remplies :

- Ils sont associés à un agent (avantageusement de masquage) porteur de fonction(s) carboxylique(s) et d'une fonction réactive (et avantageusement libérable à la cuisson) avec les fonction isocyanate (avec les préférences indiquées dans la présente description) ;
- les composés issus de la réaction entre l'isocyanate d'une part et l'agent de masquage et de l'agent porteur de fonction(s) carboxylique(s) d'autre part, présente la température de transition vitreuse (Tg) (et point de fusion) requise.

Un des avantage de l'utilisation de groupe carboxylique selon la présente invention réside dans le fait qu'il permet d'utiliser des groupes masquants qui sans la présence de groupe carboxylique ne présenteraient pas de point de fusion ou de température de transition vitreuse (Tg) suffisant pour l'utilisation en application poudre. C'est notamment le cas des triazoles, qui, lorsqu'ils sont non substitués (chacun des isomères seul ou mélange en toute proportion des isomères), sont particulièrement économiques.

Lorsque l'on utilise un unique agent de masquage il est souhaitable que ce soit un composé selon la formule I où Z est ester, avec les préférences indiquées dans la demande de brevet N° EP0680 984 A, page 2, lignes 41 à 50.

Comme cela a déjà été mentionné selon la présente invention, il est préférable que le point de fusion du composé ou du mélange de composés obtenu présente un point de fusion apparent au moins égal à 30°C, de préférence 50°C.

Il est également préférable que la température de transition vitreuse soit au moins égale à 20°C avantageusement à 40°C.

Il est préférable de choisir les composés selon la présente invention de manière qu'ils réagissent complètement avec un alcool primaire à 250°C en moins d'une demi-heure.

On considère que la réaction est complète si elle est réalisée à 90% ou plus.

Ainsi que cela a été mentionné plus haut, les isocyanates pour lesquels l'invention est la plus intéressante sont ceux dont l'atome d'azote est lié à un carbone d'hybridation sp$^3$, et plus particulièrement aliphatiques, et notamment aux polyméthylènes diisocyanates (Par exemple TMDI TétraMéthylène-DIisocyanate et HMDI [HexaMéthylèneDIisocyanate = OCN - (CH$_2$)$_6$ - NCO]) et leurs différents dérivés de condensation (biuret, etc.) et de di- et de "trimérisation" (dans le domaine considéré on appelle trimère les mélanges issus de la formation de cycles isocyanuriques à partir de trois fonctions isocyanates ; en fait il y a à côté du trimère vrai des produits plus lourds issus de la trimérisation).

Selon la présente invention, Il est souhaitable et parfois nécessaire que le pourcentage de fonction (donc exprimée en équivalent) isocyanate libre résiduelle attachée à un squelette comportant un enchaînement polyméthylène exocyclique (cf. supra) soit au plus égal à 5%, avantageusement à 3%, de préférence à 1%. Les points de fusion ou de transition vitreuse les plus élevés sont obtenus avec des pourcentages ne dépassant pas 0,5%. Les teneurs en dérivé aromatique hydroxylé sur le noyau sont également avantageusement faibles c'est-à-dire au plus égales à 5%, avantageusement à 3%, de préférence à 1%.

En revanche, jusqu'à une teneur en masse de 1/3, la présence dans ledit isocyanate de trimères non masqué de monomères cycloaliphatique tel que l'IPDT ou le nBDT ont un effet favorable sur la température de transition vitreuse (Tg) et ne gène en aucune façon l'obtention de revêtement de bonne qualité. le tels compositions peuvent aisément être obtenues par mélange du trimère non masqué dans le composé masqué fondu.

Si l'on se réfère aux composés utilisables comme polyols de la composition selon l'invention, ceux qui permettent d'obtenir le plus aisément des peintures ou des vernis en poudre de faible brillance sont des résines acryliques hydroxylées et/ou polyesters saturés ou insaturés hydroxylés, linéaires ou ramifiés, présentant un poids moléculaire approprié, et susceptibles d'être réticulées par une réaction avec un prépolymère d'isocyanate (c'est-à-dire un isocyanate au moins partiellement masqué selon l'invention).

Ledit prépolymère est fourni avec des fonctions actives masquées (ou bloquées) et il est thermiquement activé par la libération de l'agent bloquant, en échangeant les groupes isocyanates qui réagissent avec les groupes hydroxyles du liant, en présence ou en l'absence de catalyseurs.

Ce système permet d'obtenir des peintures en poudre présentant une viscosité en fusion appropriée et une température de transition vitreuse supérieure à 40°C, entraînant une stabilité chimique et physique lors du stockage.

L'éventuelle fonctionnalité du carboxyle, qui définit le poids moléculaire du polymère, permet ainsi une double réticulation avec des résines époxy aromatiques ou aliphatiques et/ou des hydroxyalkylamides.

Ledit excès de groupes acides est déterminé par l'indice d'acidité de celui-ci, exprimé en milligrammes d'hydroxyde de potassium nécessaires pour neutraliser l'acidité libre d'un gramme de polyol (parfois désigné par "résine").

L'indice d'hydroxyle correspond aux milligrammes d'hydroxyde de potassium nécessaires par gramme de résine pour neutraliser l'excès d'acide acétique libéré lors de l'acétylation (par l'anhydride acétique) du polymère hydroxylé. Pour plus de détail on peut se rapporter à la norme ASTM-E222.

L'indice d'hydroxyle du polymère peut varier entre 10 et 350 mg KOH/g, de préférence entre 15 et 80. L'indice d'acidité est au plus égal à environ 20 mg KOH/g, avantageusement au plus 15 mg KOH/g ; il est en outre avantageusement d'au moins 2 mg KOH/g, de préférence d'au moins 4 mg KOH/g. Un bon choix consiste à prendre des polymères hydroxylés dont l'indice d'acide est compris de préférence entre 3 et 15 mg KOH/g.

Le poids moléculaire en chiffre, $\overline{M}n$ , du liant ou polymère hydroxylé de la présente invention varie entre 2000 et 15000 g/mol. Le poids moléculaire est déterminé par chromatographie par perméation du gel (GPC). La technique utilise comme gels, deux gels de polystyrène (ultrastyragel® à $10^4$ et 500 Ä), le THF comme solvant et le soufre comme standards.

Il est souhaitable que le degré de ramification (c'est-à-dire le nombre moyen de fonction OH libre par molécule) soit compris entre 2 et 4, avantageusement entre 2,5 et 3.

La matité croît avec la ramification. La ramification peut être obtenue en utilisant des polyols de fonctionnalité supérieure à 2 (en général des triols) ou des polyacides (souvent utilisés sous la forme d'anhydride pour réduire la quantité d'eau dégagée pendant la réaction) de fonctionnalité supérieure à 2. Ce dernier cas est préféré pour la matité. En particulier l'acide trimellitique, surtout sous la forme d'anhydride est très favorable.

Dans le cas de l'utilisation de polyesters hydroxylés pour la présente invention, on emploie le produit de l'estérification d'un ou plusieurs acides ou anhydrides di- ou polycarboxyliques, aliphatiques, aromatiques ou cycloaliphatiques ou leurs esters méthyliques, qui comptent 2 à 36 atomes de carbone.

Par exemple, on peut citer l'acide adipique, l'acide succinique, l'acide sébacique, l'acide subérique, l'acide azélaïque, l'acide décanedicarboxylique, l'acide glutarique, l'acide téréphtalique, l'acide isophtalique, l'acide ou l'anhydride phtalique, l'acide naphtalènedicarboxylique, l'acide ou l'anhydride hexahydrophtalique, l'acide 1,4-cyclohexanedicarboxylique, des acides gras dimérisés, l'anhydride trimellitique.

Le poids moléculaire du polymère peut être réglé par l'ajout d'acides monocarboxyliques ou de leurs esters méthyliques, aliphatiques ou aromatiques ayant 2 à 18 atomes de carbone.

Le pourcentage du ou des acides(s) ou anhydride(s) décrit(s) précédemment dans l'ensemble du polymère varie entre 20 et 70%, de préférence 30 et 60%, pris individuellement ou mélangés.

Si le polymère de la présente invention est insaturé, on utilise des acides ou anhydrides di- ou polycarboxyliques insaturés en oléfines comme l'acide ou l'anhydride maléique, l'acide ou l'anhydride tétrahydrophtalique, l'acide fumarique, l'acide ou l'anhydride hexachloroendométhylènetétrahydrophtalique, l'acide méthylmaléique, l'acide itaconique ou des dérivés du dicyclopentadiène, méthylmaléique, de l'acide itaconique, maléique ou fumarique.

Parmi les alcools polyhydroxylés utiles pour la synthèse du polyester figurent : l'éthylèneglycol, le 1,2- ou 1,3-propylèneglycol, le 2- méthylpropanediol, le diéthylèneglycol, le dipropylèneglycol, le 1-4-butanediol, le 2,3-butylèneglycol, le 1,6-hexanediol, le 1,5-pentanediol, le néopentylglycol, le cyclohexanediméthanol, le triéthylèneglycol, l'hydroxypivalate de néopentylglycol, le tétraéthylèneglycol, le polyéthylèneglycol, le polypropylèneglycol, le dibutylèneglycol ou les polyéthylèneglycols, le triméthylpentanediol, le butyléthylpropanediol, la glycérine, le triméthylolpropane, l'hexanetriol, le pentaérytritol, le sorbitol, le triméthyloléthane, le tris(2-hydroxyéthyle)-isocyanurate. Le pourcentage de ceux-ci peut varier entre 10 et 60%, de préférence entre 10 et 50%.

Pour la préparation des polyesters et notamment lors de la création ou de la transformation de la liaison ester il est indiqué d'utiliser des catalyseurs connus "per se" pour l'estérification ; ces catalyseurs qui peuvent se retrouver dans la composition finale, peuvent être utilisés seuls ou en mélange. Parmi les catalyseurs utilisables dans le cadre de la présente invention, il convient de citer plus particulièrement ceux qui sont à base d'acide protique (surtout ceux qui sont organiques) ou de Lewis, avantageusement organique. Plus spécifiquement parmi les acides organiques protiques on peut citer les acides sulfoniques, dont les plus courants sont les acides paratoluène sulfonique, et méthane sulfonique. Parmi les acides de Lewis, il convient de citer ceux à base de titane, tels que le tétrachlorure de titane, titanate de tétra n-butyle et d'isopropyle, tétrakis(2-éthylhexyl)titanate, acétylacétonate de titane, titanate de stéaryle, titanate de nonyle, titanate de cétyle, ceux à base de vanadium, tels que vanadate d'isopropyle ou de n butyle, ceux à base de Zirconium, tels que le tétrachlorure de Zirconium, le zirconate de n-propyle ou de n-butyle, ceux à base d'étain, tels que les chlorures d'étain anhydres ou hydratés, oxyde de dibutylétain, octoate d'étain, hexanoate de butylétain, oxalate d'étain, oxyde de monobutylétain, dihydroxyde de monobutylchloroétain, dilaurate de dibutylétain, diacétate de dibutylétain, tris-(2- éthyl héxanoate) de monobutylétain.

L'utilisation des catalyseurs ci-dessus est particulièrement intéressante dans le cas des polyesters saturés hydroxylés, et ce en pourcentage masse avantageusement compris entre 1/2 et 2% (en masse) par rapport à l'ester hydroxylé saturé.

L'adjonction des composés des types précédents permet notamment de réduire les temps de fabrication et l'émission de composé volatile et l'optimisation de la coloration finale de ces polyols particulièrement bien adapté à la présente invention.

Dans le cas où l'on part d'ester méthylique (d'acides di- ou polycarboxyliques), il est très souhaitable d'utiliser ceux des catalyseurs ci-dessus qui sont connus pour bien catalyser la transestérification ou d'en introduire d'autres connus pour ce faire. Par exemple les carboxylates de zinc, le trioxyde d'antimoine ou tout autre catalyseur connu de l'homme de métier dans le domaine de la technique de la condensation. Les quantités à utiliser sont avantageusement entre 1/2 et 1% (en masse) de la charge initiale.

Pour améliorer ou protéger le polymère de la coloration pendant le processus d'estérification, outre le fait de travailler en atmosphère inerte, il est préférable d'ajouter des additifs antioxydants, tels que le phosphite de triphényle, le phosphite de tris nonylphényle, le diphosphite de stéarylpenta érythritol, ou leurs équivalents. De préférence on utilise ces composés en quantité au moins égale à 5 pour mille et au plus égale à 15 pour mille.

Pour obtenir le polyester mentionné ci-dessus, on utilise les techniques en elles-mêmes connues. On peut citer les conditions réactionnelles usuelles à savoir :

- température finale comprise entre environ 200°C et 260°C,
- pression absolue comprise entre 5 HectoPascals et 800 kiloPascals.

Il convient de contrôler, l'indice d'acidité, l'indice d'hydroxyle, on ajuste l'alcalinité au point permettant d'obtenir les meilleures propriétés de recouvrement du polyuréthanne. Alors, et avant la décharge, en principe dans une enceinte réfrigérée, on procède à l'incorporation des catalyseurs, antioxydants, et tout additif requis par l'application finale.

Les polyesters utilisés pour la présente invention présentent une température de transition vitreuse (Tg) comprise entre 40 et 80°C, de préférence entre 50 et 70°C, afin de conférer au système la stabilité nécessaire lors du stockage. Il est possible d'utiliser des mélanges de polyesters amorphes et cristallins dont les proportions appropriées doivent permettre une bonne stabilité, aussi bien chimique que physique. La Tg du polymère est déterminée par calorimétrie par analyse différentielle (DSC).

Dans le cas où on utilise des polymères acryliques hydroxylés, pour la présente invention, on emploie un seul liant, la Tg étant comprise entre 40 et 100°C, ou bien des mélanges comprenant 0 à 30% d'un polymère acrylique, la Tg étant comprise entre -20 et 50°C, et 70 et 100% d'un polymère acrylique hydroxylé, la Tg étant comprise entre 40 et 100°C. Avec ledit mélange, le système peut être traité facilement et présente une bonne stabilité lors du stockage ainsi que de bonnes propriétés chimiques et mécaniques.

Les polymères acryliques hydroxylés peuvent être obtenus en faisant réagir des monomères alpha, bêta insaturés en éthylène, en particulier des monomères vinyles aromatiques et des esters d'acides carboxyliques alpha, bêta insaturés en éthylène. On peut citer, par exemple, le styrène et ses dérivés, tels le méthylstyrène ou le chlorostyrène ; dans le cas de produits d'extérieur, ils sont présents dans des quantités comprises entre 5 et 54%, de préférence entre 10 et 25% de l'ensemble des monomères. Des quantités inférieures à 5% peuvent affecter la résistance à la corrosion.

Parmi les esters d'acides alpha, bêta insaturés en éthylène, on peut citer les esters d'acide acrylique et méthacrylique comme l'acrylate de méthyle, l'acrylate d'éthyle, l'acrylate de butyle, l'acrylate de 2-éthylhexyle, l'acrylate de dodécyle, le méthacrylate de méthyle, le méthacrylate d'éthyle, le méthacrylate de butyle, le méthacrylate de 2-éthylhexyle, le méthacrylate laurique. De préférence, les esters d'insaturés sont présents dans une quantité comprise entre 5 et 8%, et correspondent à un mélange d'esters d'alcoyle ayant 1 à 3 atomes de carbone et 4 à 20 atomes de carbones, par exemple un mélange de méthacrylate de méthyle et d'acrylate de butyle.

La fonctionnalité hydroxyle du polymère acrylique est conférée par la copolymérisation de monomères ayant des groupes hydroxyles, comme le méthylacrylate d'hydroxyéthyle et l'acrylate, l'acrylate d'hydroxypropyle et le méthacrylate dans des quantités comprises entre 5 et 80%, ce pourcentage, portant sur l'ensemble des monomères, étant nécessaire pour obtenir l'indice d'hydroxyle indiqué.

Le polymère acrylique peut présenter un certain indice d'acidité, normalement inférieur à 15 provenant de l'ajout d'acide acrylique, méthacrylique, itaconique ou fumarique et/ou d'acide ou anhydride maléique.

Pour préparer lesdits polymères acryliques, les différents monomères sont mélangés et on les fait réagir par polymérisation de radicaux libres. Parmi les initiateurs pouvant être utilisés, on peut citer notamment le peroxyde de benzoyle, l'hydropéroxyde de tertiobutyle, le péroxyde de ditertiobutyle, l'azo-bis-isobutyronitrile. Pour régler le poids moléculaire, on peut utiliser des agents de transfert de chaîne comme l'acide mercaptopropionique, dodécyle et de mercaptan laurique. La polymérisation est effectuée en solution, en utilisant un solvant dans lequel les monomères sont solubles comme le toluène, le xylène, l'acétate de butyle, l'acétate de propylèneglycolméthyléther, entre autres. Une fois la polymérisation achevée, le mélange de réaction se volatilise, sous vide, pour éliminer le solvant organique et récupérer le polymère solide. La teneur résiduelle en solvants ou composés volatils doit être inférieure à 0,5%.

Lorsque l'on utilise les polymères acryliques hydroxylés répondant aux conditions décrites ci-dessus, on obtient, certes, une réticulation satisfaisante avec un prépolymère à fonctions isocyanates masquées selon la présente invention, avec la matité désirée, mais les propriétés mécaniques restent insuffisantes pour les usages soumis aux intempéries. Aussi est-il préféré d'utiliser les systèmes polyesters saturés et polyisocyanates.

L'indice d'acidité que présente le polymère de la présente invention permet de faire réagir les groupes carboxyles avec des polyépoxydes aliphatiques, aromatiques et/ou bêta-hydroxyalkylamides, et on obtient ainsi une réticulation double.

Ainsi que cela a été mentionné précédemment les catalyseurs d'estérification peuvent se retrouver dans le polyester final et jouer un rôle dans la matité. Pour améliorer la reproductibilité de cet effet et en faire bénéficier les di-ou polyalcools polyacryliques, il est préférable pour avoir une bonne matité de vérifier la présence et, le cas échéant, d'ajouter un catalyseur d'estérification (y compris de transestérification).

Il convient d'assurer une teneur en catalyseur du liant, au moins égale à 0,5‰, avantageusement à 1‰, de préférence à 2‰, il est préférable que la teneur ne dépasse pas en masse 5%, avantageusement 3%, de préférence à 2%. Comme la plupart des catalyseurs sont à base d'élément à caractère métallique, il peut être plus pratique d'exprimer cette caractéristique en équivalent atomique. Dans ce cas on exprime qu'il convient d'atteindre une teneur au moins égale à 0,003 équivalent par kg masse (de liant), avantageusement à 0,005, de préférence à 0,01 équivalent, il est préférable que la teneur ne dépasse pas en masse 0,3 équivalent, avantageusement 0,2 équivalent, de préférence à 0,1 équivalent par kg masse (de liant).

Les catalyseurs d'estérification donnant le meilleur mat sont des catalyseurs présentant l'une des, de préférence les deux caractéristiques suivantes :

- une faible liposolubilité,
- une forme avantageusement solide, de préférence cristallisée.

En ce qui concerne la faible liposolubilité, il convient de mentionner que ces catalyseurs préférés sont peu ou non solubles dans les milieux (chlorobenzène + octanol) du test à l'octanol (voir infra).

En général pour répondre à ces conditions, il est préférable de choisir les sels [présentant une activité catalytique] minéraux et ou les sels organiques (y compris les sels dérivés des hydrocarbures comme par exemple ceux correspondant à "l'anion" $CH_3CH_2^-$, mais il ne sont pas les plus avantageux), tels que sulfonate, carboxylate, acétylacétonate, phosphate, phosphonate, phosphinate, présentant peu de maillons méthylène ou méthyle, avantageusement en moyenne au plus 3 par anion (par exemple le dianion malonique [$^-$OOC-$CH_2$-COO$^-$] présente 1/2 méthylène par anion), de préférence au plus 2, plus préférentiellement au plus 1 ; et même zéro.

En ce qui concerne la forme solide il est préférable que le point de fusion soit supérieur à celui de mélange, notamment par extrusion.

Parmi les catalyseurs susceptibles de donner de très bons résultats on peut citer ceux qui sont réputés catalyser les réactions d'allophanatation ; une autre catégorie de catalyseur qui d'ailleurs recouvre largement celle des catalyseurs d'allophanation, sont les catalyseurs de la réaction isocyanate acide carboxylique.

Parmi les catalyseurs, donnant particulièrement de bons résultats, il convient de citer les sels d'étain II, tels. que pyruvate, oxalate, halogénure et notamment chlorure (halogénures qui peuvent présenter en outre l'intérêt de donner une surface dite structurée).

De manière surprenante, les catalyseurs qui sont susceptibles d'être utilisés comme catalyseurs de la réaction de masquage, peuvent favoriser l'apparition du mat (ou du satiné). Ainsi, l'on peut également citer comme catalyseurs favorisant le matage les bases organiques dont la fonction basique est portée par un atome d'azote ou de phosphore, l'azote étant préféré. Il est souhaitable que l'atome basique ne porte pas d'hydrogène. La composition de l'invention comprend de façon caractéristique une telle base dont la fonction basique est portée par un atome d'azote ou de phosphore, ledit atome n'étant pas porteur d'hydrogène. Dans les bases précitées, et en particulier dans celles présentes dans la composition de l'invention, la basicité est au moins égale à celle. des noyaux pyridiniqués (Par exemple pyridine *stricto sensu* , picolines, quinoléine). les bases préférées sont les phosphiries ou de préférences les amines tertiaires. Les amines tertiaires peuvent présenter depuis trois jusqu'à environ 50 atomes de carbone par fonction basique (rappelons qu'il est plus pratique qu'il n'y en ait qu'une par molécule). les amines lourdes, surtout les grasses ont un effet favorable sur l'aspect de surface peinte, mais l'effet sur la matité est un peu plus faibles.

Les amines ont un effet également favorable sur les propriétés mécaniques, ce qui indique une catalyse de la réticulation en phase poudre.

Il est, certes, préférable que les bases organiques soient, per se, peu volatiles (Eb au moins égale à 80°C, avantageusement à 100°C, de préférence 200°C), mais, dans les conditions de réticulation de poudres l'observation de la faible volatilité n'est pas très contraignante et est notamment aisément atteinte dès lors qu'il y a des fonctions acides libres dans le liant en quantité au moins égale à la quantité de base (exprimée en équivalents). sinon on peut prévoir d'utiliser des bases plus lourdes, c'est-à-dire dont la masse moléculaire est au moins égale à 100, avantageusement à 180, de préférence grasses, c'est-à-dire dont la masse moléculaire est supérieure à 250. Les bases organiques peuvent être pures, ou en mélange. Les amines peuvent comporter d'autres fonctions et notamment les fonctions correspondant aux fonctions des acides aminés et des fonctions éther cyclique comme la N-méthylmorpholine, ou non. Ces autres fonctions sont avantageusement sous une forme qui ne réagisse pas avec les fonctions isocyanates.

Pour obtenir un mat intense, il est souhaitable que la quantité d'amine soit au moins égale à environ 1 % (en équivalent), avantageusement à 2 %, de préférence à 3 % des fonctions isocyanate masquées dans la poudre. les amines peuvent être utilisées seules ou en combinaison avec les catalyseurs métalliques préférés mentionner ci dessus

Ce ou ces catalyseurs favorisant le matage peuvent être introduits à diverses étapes de la préparation de la peinture poudre notamment pendant le malaxage précédant la dernière extrusion ou pendant les opérations précédentes. En particulier dans le polyols après la condensation.

L'utilisation de ces polyols contenant au moins un des catalyseurs ci-dessus, est particulièrement favorable pour la mise en oeuvre de la présente invention (pour le calcul des concentrations on peut utiliser les données ci-dessus pour le liant, en tenant compte du fait que le polyol représente 80% du liant). On peut également utiliser une partie des polyols jouant le rôle de produit vecteur du catalyseur facilitant son conditionnement dans le mélange final. Dans ce cas, la concentration en masse est supérieure aux valeurs dans le liant énoncées ci-dessus et peut atteindre 25, voire 50%.

Le liant de la présente invention permet d'obtenir des peintures mates (faible brillance), lisses, structurées, texturées et d'autres effets comme l'effet de grenaille, en utilisant les additifs, charges, pigments et procédés de fabrication connus par les personnes familières avec la fabrication de revêtements en poudre. La présence de cires (matifiantes) dans la composition pour revêtement, permet d'améliorer la matité. Mais elle favorise la formation de microcratère qui sont à éviter dans certaines utilisations de la peinture. Compte tenu de ce qui précède l'homme de métier choisira ou non d'utiliser ces cires.

Ces cires, en elles-mêmes connues, peuvent être choisies parmi les polyoxydes d'éthylène, sont ajoutées dans une proportion allant de 0 à 5% par rapport au liant (en masse).

Elles peuvent également être choisies parmi les mélanges de polyoxydes d'éthylène du type ci-dessus et d'hydrocarbures fluorés, avantageusement perfluorés et notamment parmi les polymères du tétrafluoroethène (PTFE). Dans le cas des hydrocarbures fluorés, il est préférable de ne pas dépasser significativement 1%. On les utilise en général à une teneur supérieure à 0,1% par rapport au liant.

L'ensemble des charges et pigments peut atteindre 2/3 de la masse du liant.

Dans la formulation de peintures, on doit trouver les pigments appropriés qui permettent d'obtenir la couleur souhaitée, ceux-ci pouvant varier entre 1 et environ 50% en poids de la totalité de la peinture en poudre. On peut ainsi utiliser des charges dans la formulation dans des quantités comprises entre 5 et 40%.

Parmi les pigments, il convient de faire une mention spéciale du bioxyde de titane. En effet ce pigment peut jouer un rôle neutre ou favorisant l'aspect mat selon le prétraitement choisi. Il est apparu que les oxydes de titane ayant subi un traitement silice (et éventuellement alumine) augmentaient significativement la matité, celui ayant l'effet le plus important étant celui vendu sous la dénomination Titafran RL68.

Les bioxydes de titane traités à l'oxyde de zirconium n'ont que peu d'influence sur la matité.

L'homme de métier peut ainsi aisément moduler le caractère satiné ou mat en jouant sur bioxyde de titane utilisé.

La peinture ou les vernis selon la présente invention peuvent contenir les divers types d'additifs, en eux-mêmes connus, tels qu'agents dégazants, de nivellement, antioxydants et absorbant les U.V. (anti U.V.). Ils peuvent également contenir les divers adjuvants de matité connus pour améliorer cette dernière.

Ainsi, comme agent dégazant recommandé on peut citer la benzoïne, notamment présente en quantité comprise entre 0,5 et 3%, laquelle permet aux composés volatils de se libérer du film pendant le durcissement et d'empêcher des défauts comme la formation de cratères ou de piqûres.

Les additifs d'étalement recommandés sont les polymères acryliques, les polymères fluorés ou les siloxanes polymères, dans des quantités comprises entre 0,5 et 5% ajoutés directement, en tant que "master-batch" (mélange maître) dans des polymères appropriés ou absorbés dans de la silice.

Pour améliorer la tenue en extérieur, la résistance à la surcuisson ou au durcissement dans des fours à injection directe de gaz, on recommande d'ajouter aux formulations des compositions absorbant les U.V. et/ou antioxydantes du type primaire et/ou secondaire, du type phénolique ou des phosphites d'alcoyle/aryle. Lesdits additifs peuvent être présents dans la formulation dans une quantité comprise entre 0,5 et 2% de l'ensemble de la peinture.

Pour réduire la température de durcissement (de réticulation), on peut ajouter à la formulation des catalyseurs de formation d'uréthanne comme le DBTDL (dibutyldilaurate d'étain), ajoutés directement dans le prémalaxage ou en tant que mélange maître.

Les peintures en poudre mate, qui font l'objet de la présente invention, peuvent avantageusement être fabriquées en malaxant en fusion les composés de la formulation. D'abord, on les prémalaxe dans un malaxeur puis on les fait fondre, on les homogénéise et les disperse dans une extrudeuse à une ou plusieurs vis.

Il est souhaitable que la température de mélange de malaxage et d'extrusion soit au plus égale à environ 130°C, avantageusement à environ 110°C, de préférence à 100°C (3 chiffres significatifs). Il est souhaitable que la température d'extrusion soit au moins égale à environ 60°C, avantageusement à environ 70°C, de préférence aux alentours de 80-90°C. On laisse refroidir la matière extrudée obtenue, on la passe dans un moulin jusqu'à l'obtention d'une peinture présentant la granulométrie souhaitée (en général, $d_{90}$ est au plus égale à environ 200 micromètres, avantageusement à 100 micromètres (2 chiffres significatifs) et $d_{10}$ au moins égale à environ 20 micromètres, avantageusement à environ 50 micromètres) en vue de son application sur des supports métalliques comme l'acier, l'aluminium ou d'autres alliages, le verre, le plastique, le bois.

Le rapport entre le(s) polyol(s) et le(s) isocyanate(s) est défini par la stoechiométrie de déblocage. On choisit en général la quantité stoechiométriquement nécessaire d'isocyanate pour réagir avec la totalité des hydroxyles libres, avec une tolérance de 20%, avantageusement de 10%, de préférence de 5%. Comme il est préférable d'être en excès d'isocyanate, on préfère les fourchettes légèrement décalées. En d'autres termes, la quantité d'isocyanate à ajouter est avantageusement au moins égale à environ 90% et au plus égale à environ 120% de la quantité stoechiométrique ; de préférence elle est au moins égale à 95% et au plus égale à environ 110% de la quantité stoechiométrique ; l'intervalle le plus fréquent et donc le plus souhaitable étant au moins égal à 100% (trois chiffres significatifs) et au plus égale à 105% de la quantité stoechiométrique. Lorsque l'on utilise des systèmes présentant une forte proportion d'acide libre (par exemple au moins 2/3 des fonctions isocyanates masquées, voir supra) on peut envisager d'augmenter le rapport entre isocyanate et fonction hydroxyle de 10 à 30 points (%) environ par rapport aux valeurs ci-dessus.

La poudre obtenue peut être appliquée avec un pistolet électrostatique ou par un lit fluide. L'application préférée de la présente invention est celle effectuée avec le pistolet électrostatique à charge et à effet Corona ou par frottement (triboélectrique).

Le substrat sur lequel la peinture est appliquée, principalement de l'acier, l'aluminium, peut ou non être préchauffé avant l'application. Une fois appliquée, la poudre est fondue et durcie au four pendant 10 minutes à 2 heures, à une température comprise entre 140 et 220°C selon que le système est ou non catalysé en général pendant 10 à 30 minutes à une température variant de 180°C à 220°C.

Compte tenu de ce qui précède, l'homme de métier adaptera la cuisson en se rappelant que l'augmentation de la température de cuisson permet de diminuer la durée et réciproquement.

Un des avantages de la présente invention réside dans le fait de pouvoir obtenir des mats profonds sans nécessairement faire appel aux composés présentant au moins une fonction amide substituée par un alcoyle portant lui-même une fonction alcool en bêta de l'azote [ces produits sont souvent vendus sous la dénomination Primid® et correspondent le plus souvent à la diamidification d'un diacide (Par exemple l'acide adipique, malonique, succinique, glutarique,.....ou leur mélange) par la diéthanolamine]. Certes, il est possible de les utiliser mais leur addition n'apporte que peu de mat supplémentaire. Aussi est-il notamment possible de n'en utiliser que peu (au plus 3 % en masse du revêtement, avantageusement au plus 2 %, de préférence au plus 1 %) ou mieux encore de n'en ajouter pas du tout.

Ainsi selon la présente invention il est possible d'obtenir des revêtements présentant une structure très légèrement alvéolaire. Les alvéoles sont peu nombreux et représentent suffisamment peu de volume pour que les propriétés mécaniques en soient altérées mais au voisinage de la surface se transforment en cratères invisibles sans grossissement et induisent des ondulations d'une taille (dénivelée) du même ordre de grandeur que les longueurs d'onde du spectre visible.

Plus précisément les compositions selon la présente invention permettent d'obtenir des revêtements mats ou satinés qui présentent avantageusement en moyenne sur une section normale à la surface des ondulations d'une dénivelée de 0,2 à 5 µm (micromètres), de préférence de 0,4 à 3 µm (micromètres) et dans le cas les plus favorables d'environ 1 à 3 µm (micromètres).

La densité statistique est avantageusement de l'ordre de 5 à 500 "ondulations" par millimètre et de préférence d'environ 10 à environ 100 "ondulations" par millimètre.

Une partie de ces ondulations peut correspondre (et cela améliore la qualité du mat) (en vue de dessus) à des cercles (ressemblant sous très fort grossissement à des cratères [lunaires] très aplatis). [les cratères de diamètre inférieur à 0,2 µm (micromètre) et supérieur à 10 µm (micromètre) ne sont pas pris en considération].

En général, ces cratères représentent en surface de 1/20 à 1/3 de la surface.

La moitié de la surface, avantageusement les 2/3, de préférence le trois quart correspond à des cratères dont le diamètre est au moins égal à 1, avantageusement à 2 µm (micromètre) et au plus égal à 6 µ, de préférence à 5 µm (micromètre).

Une des caractéristique des compositions selon la présente invention est de dégager dans les conditions de réticulation une faible quantité de gaz carbonique qui est à l'origine des alvéoles, cratères et/ou ondulations et de la matité.

Les alvéoles sont parfaitement observables au microscope électronique

La présente invention sera mieux comprise à l'aide des exemples illustratifs suivants dans lesquels sont comparés les différents systèmes des peintures mates pour l'extérieur/l'intérieur, afin d'indiquer les points favorables du système proposé.

## TEST A L'OCTANOL - définitions

| température de "libération" : (ou de "déblocage") | c'est la température la plus faible à laquelle l'agent de masquage de l'isocyanate masqué est déplacé à hauteur de 9/10 (arrondi mathématique) par un monoalcool primaire (l'alcool primaire est en général l'octanol). |

| durée de vie au stockage | : Pour s'assurer, une bonne durée de vie au stockage, il est préférable de choisir des fonctions isocyanates masquées dont le test à l'octanol montre une "libération" à 80°C, avantageusement à 90°C, au plus égale à 90%. |

| Avancement de la réaction : | On considère que la réaction est complète si elle est réalisée à plus de 90%. |

## MODE OPERATOIRE

Dans un tube, type SCHOTT, avec agitation magnétique, on charge environ 5 mmol en équivalent NCO masqué protégé à évaluer.

On ajoute 2,5 à 3 ml de dichloro-1,2 benzène (solvant) l'équivalent d'octanol-1 (5 mmol, soit 0,61 g et éventuellement avec le catalyseur à tester avec le groupe masquant).

Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide et le résidu est analysé en RMN, Masse et infra rouge. A partir de ces données, on évalue le pourcentage de fonction isocyanate masquée condensée avec l'octanol-1.

## PRODUITS UTILISES

Les produits utilisés dans les exemples ci-après sont souvent désignés par leur dénomination commerciale. Ces produits sont décrits dans des fiches techniques dont on trouvera les références dans le tableau suivant :

| nom commercial | mise sur le marché par | type de produit chimique | référence de fiche technique | date de la publication |
|---|---|---|---|---|
| BYK- 360 P | BYK Chemie GmbH | polyacrylate adsorbé sur silice | SM 18 | juin 1993 |
| Ceraflour 961 | BYK CERA | cire de polyéthylène micronisée | XM 961 | septembre 1995 |
| DT 3329-1 | CIBA GEIGY | cire | | avril 1994 |
| XB 4957 | CIBA GEIGY | agent matifiant | Best. Nr 93118 | novembre 1993 |
| accélérateur DT 3126 | CIBAGEIGY | | 38037/F 900.110/20 | janvier 1990 |
| REAFREE 3300 | RESISA | polyester saturé hydroxylé | 3300/950119 | janvier 1996 |
| REAFREE 7000 | RESISA | polyester saturé hydroxylé * | 7000/960725 | juillet 1996 |
| REAFREE 4001 | RESISA | Polyester saturé carboxylé | 4001/960329 | mars 1996 |
| REAFREE 4401 | RESISA | polyester saturé carboxylé | 107370/960221 | février 1996 |
| REAFREE 8580 | RESISA | polyester saturé carboxylé | 107240/930309 | mars 1993 |

(suite)

| nom commercial | mise sur le marché par | type de produit chimique | référence de fiche technique | date de la publication |
|---|---|---|---|---|
| REAFREE 8180 | RESISA | polyester saturé carboxylé | 8180/960521 | mai 1996 |

**Définitions de sigles d'abréviations et marges d'indétermination**

IPDT = trimère d'ipdi (isophorone diisocyanate)
HDT = trimère d'HDI (Hexamethylène diisocyanate)
PHBM indique que le blocage est réalisé par du parahydroxybenzoate de méthyle
PHBA indique que le blocage est réalisé par de l'acide parahydroxybenzoique
Les brillances sont mesurées avec une indétermination de 5% (absolu)

**Exemple 1 : Peinture blanche**

| **MATIERES** | | | |
|---|---|---|---|
| REAFREE 7000 | 454,0 | 443,0 | 453,0 |
| HDT masqué PHBM | 121,0 | | |
| HDT/IPDT (75/25) | | 132,0 | |
| HDT masqué PHBM/PHBA (80/20) | | | 122,0 |
| oxalate d'étain | 3,0 | 3,0 | 3,0 |
| CERAFLOUR 961 | 20,0 | 20,0 | 20,0 |
| BLANC FIXE ABR | 100,0 | 100,0 | 100,0 |
| Benzoïne | 3,0 | 3,0 | 3,0 |
| BYK 360P | 9,0 | 9,0 | 9,0 |
| TiO2 (RL-68) | 290,0 | 290,0 | 290,0 |
| TOTAL | 1000,00 | 1000,00 | 1000,00 |
| **caractéristiques des peintures après cuisson** | | | |
| SUBSTRAT | | Acier (R-36) | |
| cuisson (température/temps) | 200°C 20 m | 200°C 20m | 200°C 20 m |
| ASPECT/COUCHE (microns) | MAT 60 | SAT/60 | MAT/60 |
| IMPACT (DIRECT/INVERSE) | 45/10 | 75/35 | 75/75 |
| ADHERENCE/EMBOUTISSAGE | 100/5 | 100/9.5 | 100/> 10 |
| PLIAGE | 100 | 100 | 100 |
| Résistance MEK | 105 | > 200 | > 200 |
| BRILLANCE 20. | 5 | 6 | 3 |
| BRILLANCE 60. | 30 | 35 | 15 |
| BRILLANCE 85. | 50 | 67 | 19 |
| SUBSTRAT | | Acier (R-36) | |

(suite)

| caractéristiques des peintures après cuisson | | | |
|---|---|---|---|
| Cuisson (Température/Temps) | | 210°C 20 mn | |
| ASPECT/COUCHE (microns) | MAT-SA 60 | SAT**/60 | MAT/60 |
| IMPACT (DIRECT/INVERSE) | 75/75 | 75/75 | 75/75 |
| ADHERENCE/EMBOUTISSAGE | 100/> 10 | 100/> 10 | 100/> 10 |
| PLIAGE | 100 | 100 | 100 |
| Résistance MEK | > 200 | > 200 | > 200 |
| BRILLANCE 20. | 5,7 | 6,3 | 2,5 |
| BRILLANCE 60. | 30 | 35 | 15 |
| BRILLANCE 85. | 55 | 70 | 20 |

**SAT= satiné

## Exemple 2 Peinture blanche

| MATIERES | | |
|---|---|---|
| REAFREE 7000 | 452,2 | 451,5 |
| HMDT 35% PHB ; 65% PHBM* | 122,8 | |
| HMDT 50% PHB ; 50% PHBM | | 123,50 |
| $SnC_2O_4$ | 3,0 | 3,0 |
| CERAFLOUR 961 | 20,0 | 20,0 |
| BLANC FIXE ABR | 100,0 | 100,0 |
| Benzoïne | 3,0 | 3,0 |
| BYK 360P | 9,0 | 9,0 |
| TiO2 (RL-68) | 290,0 | 290,0 |
| **TOTAL** | **1000,00** | **1000,00** |
| SUBSTRAT | Acier (R-36) | |
| cuisson (température/temps) | 200°C 20m | 200°C 20 m |
| ASPECT/COUCHE (microns) | MA-RU 70 | MA-RU 70 |
| IMPACT (DIRECT/INVERSE) | 75/75 | 75/75 |
| ADHERENCE/EMBOUTISSAGE | 100/>10 | 100/> 10 |
| PLIAGE | 100 | 100 |
| Résistance MEK | > 200 | > 200 |
| BRILLANCE 20. | 3,4 | 2,1 |
| BRILLANCE 60. | 18,7 | 7,0 |
| BRILLANCE 85. | 32,3 | 9,0 |
| SUBSTRAT | Acier (R-36) | |
| cuisson (température/temps) | 210°C 20m | 210°C 20 m |

(suite)

| MATIERES | | |
|---|---|---|
| ASPECT/COUCHE (microns) | MA-RU 70 | MA-RU 70 |
| IMPACT (DIRECT/INVERSE) | 75/75 | 75/75 |
| ADHERENCE/EMBOUTISSAGE | 100/> 10 | 100/> 10 |
| PLIAGE | 100 | 100 |
| Résistance MEK | > 200 | > 200 |
| BRILLANCE 20. | 3,4 | 2,2 |
| BRILLANCE 60. | 18,4 | 7,9 |
| BRILLANCE 85. | 31,1 | 10,4 |

**Exemple 3 : Peinture blanche**

| MATIERES | | | |
|---|---|---|---|
| | | | |
| REAFREE 7000 | 450,0 | 171 | 451 |
| oxalate d'étain | 4 | 1,4 | 4 |
| (CaC03) | 20,0 | 8,0 | 20,0 |
| HDT masqué pHBM | 120,0 | | |
| IPDT masqué pHBM | | 54,8 | |
| HDT masqué N-hydroxysuccinimide | | | 113,0 |
| CERAFLOUR 961 | 20,0 | 8,0 | 20,0 |
| BLANC FIXE ABR | 80,0 | 36,0 | 90,0 |
| Benzoïne | 3,0 | 1,2 | 3,0 |
| BYK 360P | 9,0 | 3,6 | 9,0 |
| TiO2 (RL-68) | 290,0 | 116,0 | 290,0 |
| MILLICARB (Ca C03) | 10,0 | | |
| **TOTAL** | **1000,00** | **400,00** | **1000,00** |
| **CARACTERISTIQUES** | | | |
| SUBSTRAT | Acier (R-36) | Acier (R-36) | Acier (R-36) |
| CUISSON (TEMPERATURE/TEMPS) | 210°C 20 m | 200°C 20 m | 200°C 20 m |
| ASPECT/COUCHE (microns) | MAT/50 | SAT/80 | SAT*/70 |
| IMPACT (DIRECT/INVERSE) | 75/75 | 75/40 | 75/75 |
| ADHERENCE/EMBOUTISSAGE | 100/>10 | 100/5.4 | 100/> 10 |
| PLIAGE | 100 | 0 | 100 |
| Résistance MEK | > 200 | 150 | > 200 |
| BRILLANCE 20. | 4 | 19 | 18 |

*jaunissement

(suite)

| CARACTERISTIQUES | | | |
|---|---|---|---|
| BRILLANCE 60. | 23 | 50,0 | 55** |
| BRILLANCE 85. | 60 | 71 | 75 |

**pratiquement à la limite du satiné, voire au dessus

**Exemple 4 : Peinture noire mate structurée**

| MATIERES | |
|---|---|
| $SnCl_2$ | 3 |
| REAFREE 7000 | 443,0 |
| RHODOCOAT XD2D (HMDT masqué pHBM) | 117,00 |
| DOLOMIE | 92,0 |
| BLANC FIXE ABR | 298,0 |
| CERAFLOUR 961 | 20,0 |
| BYK 360P | 9,0 |
| Benzoïne | 3,0 |
| Raven 1020 (carbon black) | 15,0 |
| **TOTAL** | **1000,00** |
| **caractéristiques** | |
| SUBSTRAT | |
| CUISSON (TEMPERATURE/TEMPS) | 200°C 20 m |
| ASPECT/COUCHE (microns) | |
| IMPACT (DIRECT/INVERSE) | 75/75 |
| ADHERENCE/EMBOUTISSAGE | 100 |
| PLIAGE | 100 |
| Résistance MEK | 100 |
| BRILLANCE 20. | 1,2 |
| BRILLANCE 60. | 6,1 |
| BRILLANCE 85. | 9,5 |

**Exemple 5 : Peinture blanche mate**

| MATIERES | |
|---|---|
| | |
| REAFREE 7000 | 464,0 |
| oxalate d'étain | 4 |
| RHODOCOAT XD2D | 120,00 |
| TITAFRAN RL-68 | 290,0 |

(suite)

| MATIERES | |
|---|---|
| BLANC FIXE ABR | 90,0 |
| CERAFLOUR 961 | 20,0 |
| BYK 360P | 9,0 |
| Benzoïne | 3,0 |
| **TOTAL** | **1000,00** |
| CUISSON (TEMPERATURE/TEMPS) | 200°C 20 m |
| IMPACT (DIRECT/INVERSE) | 75/75 |
| ADHERENCE/EMBOUTISSAGE | 100 |
| PLIAGE | 100 |
| Résistance MEK | > 200 |
| BRILLANCE 60. | 17,8 |
| BRILLANCE 85. | 34,4 |

**Exemple 6 : Formulations de couleur**

| MATIERES | PEINTURE ROUGE MATE | PEINTURE BRUNE MATE | PEINTURE NOIRE MATE |
|---|---|---|---|
| REAFREE 7000 | 454,0 | 453,0 | 451,0 |
| catalyseur insoluble | 2 | 2,6 | 3 |
| RHODOCOAT XD2D | 117,0 | 117,0 | 117,0 |
| DOLOMIT | 92 | 92 | 92 |
| BLANC FIXE ABR | 260 | 264,7 | 290 |
| CERAFLOUR 961 | 20 | 20,0 | 20 |
| BYK 360P | 9 | 9,0 | 9 |
| Benzoïne | 3 | 3 | 3 |
| Raven 1020 | | | 15 |
| Bayferrox 130 | 20,9 | 12 | |
| Printex V | 0,2 | 2,7 | |
| Cinquasia Violet R RT 887 D | 17,6 | | |
| Hornachrome yellow GMXH-35-SQ | | 14,2 | |
| Ti Pure R-960 | 4,2 | 9,8 | |
| **TOTAL** | **1000,00** | **1000,00** | **1000,00** |

(suite)

| caractéristiques | | | |
|---|---|---|---|
| SUBSTRAT | | | |
| CUISSON (TEMPERATURE/ TEMPS) | 200°C 20 m | 200°C 20m | 200°C 20 m |
| ASPECT/COUCHE (microns) | | | |
| IMPACT (DIRECT/ INVERSE) | 75/75 | 75/75 | 75/75 |
| ADHERENCE/ EMBOUTISSAGE | 100 | 100 | 100 |
| PLIAGE | 100 | 100 | 100 |
| Résistance MEK | >200 | > 200 | > 200 |
| BRILLANCE 20. | 3,3 | 2,8 | 1,7 |
| BRILLANCE 60. | 19,7 | 15,4 | 11,0 |
| BRILLANCE 85. | 47,6 | 35,5 | 30,0 |

**Exemple 7 : effet des adiuvants de condensation entre les agents masquants et l'isocyanate**

| MATIERES PREMIERES en % Masse | |
|---|---|
| REAFREE 7000 | 450,0 |
| oxalate d'étain II | 3 |
| HDT/IPDT (85/15) masqué pHBM/pHBA (85/15) comportant une proportion variable d'amine tertiaire | 128,0 |
| CERAFLOUR 961 | 20,0 |
| BLANC FIXE ABR | 80,0 |
| Benzoïne | 3,0 |
| TiO2 (RL-68) | 290,0 |

l'influence sur la matité est rassemblé dans le tableau suivant : Cuisson 200°C 10 mn sur plaque acier

| quantité et type d'amine tertiaire utilisée dans le durcisseur de départ | | brillance à un angle de 60° |
|---|---|---|
| rapport aminé/fonction NCO en % (équivalent) | en % masse totale | |
| (triéthylamine) 3,6 | 1 | 31 |
| (triéthylamine) 0,75 | 0,2 | 42 |
| (trioctylamine) 1 | 1 | 44 |
| (trioctylamine) 0,2 | 0,2 | 50 |
| (trioctylamine) 3,6 | 3,4 | 40 |

**Exemple 8 : généralisation à divers couple isocyanate/agents masquant**

| MATIERES PREMIERES en % Masse | |
| --- | --- |
| REAFREE 7000 | 450,0 |
| oxalate d'étain II | 3 |
| isocyanate | 120 |
| CERAFLOUR 961 | 20,0 |
| BLANC FIXE ABR | 80,0 |
| Benzoïne | 3,0 |
| TiO2 (RL-68) | 290,0 |
| amine/NCO | 3 % molaire |

les résultats sont rassemblé dans le tableau suivant Cuisson 200°C 10 mn sur plaque acier

| | quantité et type d'isocyanate utilisé | brillance à un angle de 60° |
| --- | --- | --- |
| NCO | agent masquant / agent porteur de fonction carboxylique | |
| HDT | acide amino caproique (65/35) | 20 |
| HDT | triazole/pHBA (50/50) | 17 |
| HDT | triazole/pHBA (70/30) | 24 |

**Revendications**

1. Composition comportant pour addition successive ou simultanée:

→ un isocyanate au moins partiellement masqué présentant une température de transrtion vitreuse d'au moins 20°C, avantageusement d'au moins 40°C ;
→ un polyol présentant les caractéristiques suivantes :

♦ une température de transition vitreuse au moins égale à 40°C;
♦ un indice d'hydroxyle au moins égal à 10 mg/g, avantageusement au moins égal à 15 mg/g ;
♦ une masse moléculaire moyenne Mn au moins égale à 1000 ; **caractérisée par le fait qu'**elle comporte en outre au moins 1, avantageusement 2, de préférence 3 des caractéristiques suivantes :

⇨ la présence de fonction carboxylique, avantageusement sous la forme d'isocyanate masqué mixte ;
⇨ la présence de catalyseur d'estérification avantageusement solide et/ou non liposobuble ;
⇨ la présence d'une cire matifiante.

et en ce qu'elle comporte en outre une base organique dont la fonction basique est portée par un atome d'azote ou de phosphore, ledit atome ne portant pas d'hydrogène.

2. Composition selon la revendication 1, **caractérisée par le fait qu'**elle est susceptible de dégager du gaz carbonique dans les conditions de la cuisson.

3. Composition selon l'une des revendications 1 et 2, **caractérisée par le fait que** ladite base organique est une amine ou un mélange d'amines, avantageusement tertiaire.

4. Composition selon l'une des revendications 1 à 3, **caractérisée par le fait que** la composition comporte

⇨ la présence de fonction carboxylique, avantageusement sous la forme d'isocyanate masqué et porteur de fonction carboxylique (COOH) ;
⇨ la présence de catalyseur d'estérification avantageusement solide et/ou non liposoluble.

5. Composition selon l'une des revendications 1 à 4, **caractérisée par le fait que** le catalyseur d'estérification est aussi un catalyseur d'allophanatation.

6. Composition selon l'une des revendications 1 à 5, **caractérisée par le fait que** le catalyseur d'estérification est à base d'étain II.

7. Composition selon l'une des revendications 1 à 6, **caractérisée par le fait que** l'isocyanate masqué porte lesdites fonctions carboxyliques qui sont sous la forme du produit de réaction d'un agent porteur de fonction carboxyliqique et d'une fonction réagissant avec une fonction isocyanate libre.

8. Composition selon l'une des revendications 1 à 7, **caractérisée par le fait que** l'isocyanate masqué porte lesdites fonctions carboxyliques qui sont sous la forme du produit de réaction d'un agent porteur de fonction carboxylique et d'une fonction réagissant avec une fonction isocyanate libre et **par le fait que** ledit agent porteur de fonction carboxylique et d'une fonction réagissant avec une fonction isocyanate libre est un agent masquant.

9. Composition selon l'une des revendications 1 à 8, **caractérisée par le fait que** le rapport (en équivalent) entre les fonctions carboxyliques d'une part et les fonctions isocyanates masquées, libres et ayant réagi avec l'éventuel agent porteur de fonction carboxyliques est au moins égale à 5 %, avantageusement 10%, de préférence 20%.

10. Composition selon l'une des revendications 1 à 9, **caractérisée par le fait que** le rapport (en équivalent) entre les fonctions carboxyliques d'une part et les fonctions isocyanates masquées, libres et ayant réagi avec l'éventuel agent porteur de fonction carboxyliques est au plus égale à 9/10, avantageusement à 4/5, de préférence à 2/3, plus préférentiellement un tiers.

11. Composition selon l'une des revendications 1 à 10, **caractérisée par le fait que** l'indice d'acidité est au plus égal à 20 mg KOH/g, compris de préférence entre 3 et 15 mg KOH/g.

12. Composition selon l'une des revendications 1 à 11, **caractérisée par le fait que** l'indice d'hydroxyle dudit polyol peut varier entre 10 et 350 mg KOH/g. de préférence entre 15 et 80.

13. Composition selon l'une des revendications 1 à 12, **caractérisée en ce que** le polymère hydroxylé de la présente invention présente un point de fusion au plus égale à 130°C, avantageusement à 110°C, de préférence à 100°C (3 chiffres significatifs).

14. Composition selon l'une des revendications 1 à 13, **caractérisée par le fait que** la masse moléculaire moyenne $\overline{M}n$ , du liant ou polymère hydroxylé de la présente invention varie entre 2000 et 15000 g/mo.

15. Composition selon l'une des revendications 1 à 14, **caractérisée par le fait que** ledit catalyseur présente les deux caractéristiques suivantes :

- une faible liposolubilité,
- une forme solide, avantageusement cristallisée.

16. Composition selon la revendication 15, **caractérisée par le fait qu'**elle se présente sous la forme d'une poudre qui présente un $d_{90}$ au plus égal à environ 200 micromètres, avantageusement à 100 micromètres.

17. Composition selon l'une des revendications 6 et 16, **caractérisée par le fait que** la poudre présente un $d_{10}$ au moins égal à 20 micromètres, avantageusement à environ 50 micromètres.

18. Composition selon l'une des revendications 1 à 17, **caractérisée par le fait qu'**elle comporte en outre du bioxyde de titane.

19. Procédé pour préparer une composition selon l'une des revendications 1 à 18, **caractérisé par le fait qu'**il comporte une étape où l'on prémalaxe les composés de la formulation dans un malaxeur puis où l'on fait fondre le polyol et avantageusement les autres composants fusibles à la température choisie, on les homogénéise et les disperse dans une extrudeuse à une ou plusieurs vis.

**20.** Procédé selon la revendication 19, **caractérisé par le fait que** la température de malaxage et d'extrusion est au plus égale à 130°C, avantageusement à 110°C, de préférence à 100°C (3 chiffres significatifs).

**21.** Procédé selon l'une des revendications 19 et 20, **caractérisé par le fait que** la température d'extrusion est au moins égale à environ 60°C, avantageusement à environ 70°C, de préférence aux alentours de 80-90°C.

**22.** Procédé selon l'une des revendications 19 à 21, **caractérisé par le fait qu'**il comporte en outre une étape de refroidissement, suivie d'une étape de broyage pour obtenir une granulométrie définie par un $d_{90}$ au plus égal à 200 micromètres, avantageusement à 100 micromètres (2 chiffres significatifs) et un $d_{10}$ au moins égal à 20 micromètres, avantageusement à environ 50 micromètres).

**23.** Utilisation de la composition selon l'une des revendications 1 à 18, pour les revêtements et notamment pour la peinture.

**24.** Revêtement susceptible d'être obtenu par l'utilisation de la composition selon l'une des revendications 1 à 18.

**25.** Revêtement mat ou satiné selon la revendication 24, **caractérisé par le fait qu'**il présente des ondulations telles qu'elles ait en moyenne sur une section normale à la surface une dénivelée de 0,2 à 5 $\mu$m.

**26.** Revêtement mat ou satiné selon l'une des revendications 24 et 25, **caractérisé par le fait qu'**il présente des ondulations telles qu'elles ait une densité statistique d'environ 5 à 500 "ondulations" par millimètre.

**27.** Revêtement mat ou satiné selon l'une des revendications 24 à 26, **caractérisé par le fait qu'**il présente des cratères représentant en surface de 1/20 à 1/3 de la surface.

**28.** Revêtement mat ou satiné selon l'une des revendications 24 à 27, **caractérisé par le fait que** la moitié de la surface des cratères est due à des cratères dont le diamètre est au moins égal à 1 et au plus égal à 6 $\mu$m (micromètre).

**Claims**

**1.** Composition for successive or simultaneous addition comprising:

    o an at least partially masked isocyanate having a glass transition temperature of at least 20°C, advantageously at least 40°C;
    o a polyol having the following characteristics:

    ■ a glass transition temperature of at least 40°C;
    ■ a hydroxyl index of at least 10 mg/g, advantageously at least 15 mg/g;
    ■ a mean molecular mass Mn of at least 1000;

**characterised in that** it also has at least 1, advantageously 2, preferably 3 of the following features:

    ➤ the presence of a carboxyl function, advantageously in the form of a mixed masked isocyanate;
    ➤ the presence of an esterification catalyst which is advantageously solid and/or non-liposoluble;
    ➤ the presence of a matting wax,

and **in that** it further comprises an organic base the basic function of which is carried by a nitrogen or phosphorus atom, said atom carrying no hydrogen.

**2.** Composition according to claim 1, **characterised in that** it is capable of giving off carbon dioxide gas under the firing conditions.

**3.** Composition according to one of claims 1 and 2, **characterised in that** said organic base is an, advantageously tertiary, amine or mixture of amines.

4. Composition according to one of claims 1 to 3, **characterised in that** the composition comprises

   ➢ the presence of a carboxyl function, advantageously in the form of a masked isocyanate carrying a carboxyl function (COOH);
   ➢ the presence of an esterification catalyst which is advantageously solid and/or non-liposoluble.

5. Composition according to one of claims 1 to 4, **characterised in that** the esterification catalyst is also an allophanation catalyst.

6. Composition according to one of claims 1 to 5, **characterised in that** the esterification catalyst is based on tin II.

7. Composition according to one of claims 1 to 6, **characterised in that** the masked isocyanate carries said carboxyl functions which are in the form of the reaction product of an agent carrying a carboxyl function and a function reacting with a free isocyanate function.

8. Composition according to one of claims 1 to 7, **characterised in that** the masked isocyanate carries said carboxyl functions which are in the form of the reaction product of an agent carrying a carboxyl function and a function reacting with a free isocyanate function and **in that** said agent carrying a carboxyl function and a function reacting with a free isocyanate function is a masking agent.

9. Composition according to one of claims 1 to 8, **characterised in that** the ratio (in equivalents) between the carboxyl functions on the one hand and the free masked isocyanate functions which have reacted with the optional agent carrying carboxyl functions is at least 5%, advantageously 10%, preferably 20%.

10. Composition according to one of claims 1 to 9, **characterised in that** the ratio (in equivalents) between the carboxyl functions on the one hand and the free masked isocyanate functions which have reacted with the optional agent carrying carboxyl functions is at most 9/10, advantageously 4/5, preferably 2/3, more preferably one-third.

11. Composition according to one of claims 1 to 10, **characterised in that** the acidity index is at most 20 mg KOH/g, preferably between 3 and 15 mg KOH/g.

12. Composition according to one of claims 1 to 11, **characterised in that** the hydroxyl index of said polyol may vary between 10 and 350 mg KOH/g, preferably between 15 and 80.

13. Composition according to one of claims 1 to 12, **characterised in that** the hydroxylated polymer of the present invention has a melting point equal to at most 130°C, advantageously 110°C, preferably 100°C (3 significant figures).

14. Composition according to one of claims 1 to 13, **characterised in that** the mean molecular mass Mn of the binder or hydroxylated polymer of the present invention varies between 2000 and 15000 g/mo.

15. Composition according to one of claims 1 to 14, **characterised in that** said catalyst has the following two characteristics:

   - poor liposolubility,
   - a solid, advantageously crystalline form.

16. Composition according to claim 15, **characterised in that** it is in the form of a powder which has a $d_{90}$ of at most about 200 microns, advantageously 100 microns.

17. Composition according to one of claims 6 and 16, **characterised in that** the powder has a $d_{10}$ of at least 20 microns, advantageously about 50 microns.

18. Composition according to one of claims 1 to 17, **characterised in that** it further comprises titanium dioxide.

19. Process for preparing a composition according to one of claims 1 to 18, **characterised in that** it comprises a step in which the compounds of the formulation are pre-mixed in a mixer, then the polyol and advantageously the other components which melt at the chosen temperature are melted, homogenised and dispersed in a single- or multi-screw extruder.

**20.** Process according to claim 19, **characterised in that** the mixing and extrusion temperature is equal to not more than 130°C, advantageously 110°C, preferably 100°C (3 significant figures).

**21.** Process according to one of claims 19 and 20, **characterised in that** the extrusion temperature is equal to at least about 60°C, advantageously about 70°C, preferably in the region of 80-90°C.

**22.** Process according to one of claims 19 to 21, **characterised in that** it further comprises a cooling step, followed by a grinding step to obtain a particle size defined by a $d_{90}$ of at most 200 microns, advantageously 100 microns (2 significant figures) and a $d_{10}$ of at least 20 microns, advantageously about 50 microns).

**23.** Use of the composition according to one of claims 1 to 18 for coatings and notably for paint.

**24.** Coating which can be obtained using the composition according to one of claims 1 to 18.

**25.** Matt or satin-finish coating according to claim 24, **characterised in that** it has undulations such that on average it has a peak-to-valley height of 0.2 to 5 $\mu$m over a section perpendicular to the surface.

**26.** Matt or satin-finish coating according to one of claims 24 and 25,
**characterised in that** it has undulations such that it has a statistical density of about 5 to 500 "undulations" per millimetre.

**27.** Matt or satin-finish coating according to one of claims 24 to 26, **characterised in that** it has craters representing, in surface area, 1/20 to 1/3 of the surface area.

**28.** Matt or satin-finish coating according to one of claims 24 to 27, **characterised in that** half the surface area of the craters is due to craters with a diameter of at least 1 and at most 6 $\mu$m (micron).

**Patentansprüche**

**1.** Zusammensetzung zur aufeinanderfolgenden oder gleichzeitigen Zugabe enthaltend :

→ ein mindestens teilweise maskiertes Isocyanat, das eine Glasübergangstemperatur von mindestens 20°C, vorteilhafterweise mindestens 40°C aufweist;
→ ein Polyol, das die folgenden Merkmale aufweist:

♦ eine Glasübergangstemperatur von mindestens 40°C;
♦ einen Hydroxyindex von mindestens 10 mg/g, vorteilhafterweise mindestens 15 mg/g;
♦ eine mittlere Molmasse Mn von mindestens 1000,

**dadurch gekennzeichnet, daß** sie außerdem mindestens 1, vorteilhafterweise 2, bevorzugt 3 der folgenden Merkmale umfaßt:

⇨ die Anwesenheit einer Carboxyfunktion, vorteilhafterweise in Form eines gemischten, maskierten Isocyanats;
⇨ die Anwesenheit eines vorteilhafterweise festen und/oder nicht fettlöslichen Veresterungskatalysators;
⇨ die Anwesenheit eines Mattierungswachses,

und dadurch, daß sie außerdem eine organische Base umfaßt, deren basische Funktion von einem Stickstoff- oder Phosphoratom getragen wird, wobei das Atom keinen Wasserstoff trägt.

**2.** Zusammensetzung gemäß Anspruch 1, **dadurch gekennzeichnet, daß** sie unter den Härtungsbedingungen Kohlensäuregas freisetzen kann.

3. Zusammensetzung gemäß einem der Ansprüche 1 und 2, **dadurch gekennzeichnet, daß** die organische Base ein Amin oder ein Gemisch vorteilhafterweise tertiärer Amine ist.

4. Zusammensetzung gemäß einem der Ansprüche 1 bis 3, **dadurch gekennzeichnet, daß** die Zusammensetzung

   ⇨ die Anwesenheit einer Carboxyfunktion, vorteilhafterweise in Form eines maskierten und eine Carboxyfunktion (COOH) tragenden Isocyanats und
   ⇨ die Anwesenheit eines vorteilhafterweise festen und/oder nicht fettlöslichen Veresterungskatalysators umfaßt.

5. Zusammensetzung gemäß einem der Ansprüche 1 bis 4, **dadurch gekennzeichnet, daß** der Veresterungskatalysator auch ein Allophanatisierungskatalysator ist.

6. Zusammensetzung gemäß einem der Ansprüche 1 bis 5, **dadurch gekennzeichnet, daß** der Veresterungskatalysator auf Zinn(II) beruht.

7. Zusammensetzung gemäß einem der Ansprüche 1 bis 6, **dadurch gekennzeichnet, daß** das maskierte Isocyanat Carboxyfunktionen trägt, die sich in der Form des Reaktionsprodukts eines eine Carboxyfunktion und eine mit einer freien Isocyanatfunktion reagierende Funktion tragenden Mittels befinden.

8. Zusammensetzung gemäß einem der Ansprüche 1 bis 7, **dadurch gekennzeichnet, daß** das maskierte Isocyanat Carboxyfunktionen trägt, die sich in der Form des Reaktionsprodukts eines eine Carboxyfunktion und eine mit einer freien Isocyanatfunktion reagierende Funktion tragenden Mittels befinden und daß das eine Carboxyfunktion und eine mit einer freien Isocyanatfunktion reagierende Funktion tragende Mittel ein Maskierungsmittel ist.

9. Zusammensetzung gemäß einem der Ansprüche 1 bis 8, **dadurch gekennzeichnet, daß** das Verhältnis (in Äquivalenten) zwischen den Carboxyfunktionen einerseits und den maskierten, freien und den Isocyanatfunktionen, die mit dem wahlfreien, eine Carboxyfunktion tragenden Mittel reagiert haben, mindestens 5%, vorteilhafterweise 10% und bevorzugt 20% ist.

10. Zusammensetzung gemäß einem der Ansprüche 1 bis 9, **dadurch gekennzeichnet, daß** das Verhältnis (in Äquivalenten) zwischen den Carboxyfunktionen einerseits und den maskierten, freien und den Isocyanatfunktionen, die mit dem wahlfreien, eine Carboxyfunktion tragenden Mittel reagiert haben, höchstens 9/10, vorteilhafterweise 4/5, bevorzugt 2/3 und bevorzugter ein Drittel ist.

11. Zusammensetzung gemäß einem der Ansprüche 1 bis 10, **dadurch gekennzeichnet, daß** der Säureindex höchstens 20 mg KOH/g, vorzugsweise zwischen 3 und 15 mg KOH/g ist.

12. Zusammensetzung gemäß einem der Ansprüche 1 bis 11, **dadurch gekennzeichnet, daß** der Hydroxyindex des Polyols zwischen 10 und 350 mg KOH/g, bevorzugt zwischen 15 und 80 schwanken kann.

13. Zusammensetzung gemäß einem der Ansprüche 1 bis 12, **dadurch gekennzeichnet, daß** das hydroxylierte Polymer der vorliegenden Erfindung einen Schmelzpunkt von höchstens 130°C, vorteilhafterweise 110°C, bevorzugt 100°C (3 maßgebliche Zahlen) aufweist.

14. Zusammensetzung gemäß einem der Ansprüche 1 bis 13, **dadurch gekennzeichnet, daß** die mittlere Molekularmasse Mn des Bindemittels oder hydroxylierten Polymers der vorliegenden Erfindung zwischen 2000 und 15000 g/Mol schwankt.

15. Zusammensetzung gemäß einem der Ansprüche 1 bis 14, **dadurch gekennzeichnet, daß** der Katalysator die beiden folgenden Merkmale aufweist.

   - eine geringe Fettlöslichkeit,
   - eine feste, vorteilhafterweise kristalline Form.

16. Zusammensetzung gemäß Anspruch 15, **dadurch gekennzeichnet, daß** sie die Form eines Pulvers aufweist, das einen $d_{90}$ von höchstens ungefähr 200 Mikrometer, vorteilhafterweise 100 Mikrometer aufweist.

**17.** Zusammensetzung gemäß einem der Ansprüche 6 und 16, **dadurch gekennzeichnet, daß** das Pulver einen $d_{10}$ von mindestens 20 Mikrometer, vorteilhafterweise ungefähr 50 Mikrometer aufweist.

**18.** Zusammensetzung gemäß einem der Ansprüche 1 bis 17, **dadurch gekennzeichnet, daß** sie außerdem Titandioxid umfaßt.

**19.** Verfahren zum Herstellen einer Zusammensetzung gemäß einem der Ansprüche 1 bis 18, **dadurch gekennzeichnet, daß** es einen Schritt umfaßt, bei dem man die Verbindungen der Formulierung in einem Rührkessel vorknetet, man dann das Polyol und vorteilhafterweise die anderen, bei der gewählten Temperatur schmelzbaren Bestandteile sich auflösen läßt und man sie in einem Extruder mit einer oder mehreren Schrauben homogenisiert und dispergiert.

**20.** Verfahren gemäß Anspruch 19, **dadurch gekennzeichnet, daß** die Knetund Extrusionstemperatur höchstens 130°C, vorteilhafterweise 110°C, bevorzugt 100°C beträgt (drei maßgebliche Zahlen).

**21.** Verfahren gemäß Anspruch 19 und 20, **dadurch gekennzeichnet, daß** die Extrusionstemperatur mindestens ungefähr 60°C, vorteilhafterweise ungefähr 70°C, bevorzugt um 80-90°C herum beträgt.

**22.** Verfahren gemäß einem der Ansprüche 19 bis 21, **dadurch gekennzeichnet, daß** es außerdem einen Kühlschritt umfaßt, der von einem Reibschritt zum Erhalt einer Korngröße gefolgt wird, die durch einen $d_{90}$ von höchstens 200 Mikrometer, vorteilhafterweise 100 Mikrometer (zwei maßgebliche Zahlen) und einen $d_{10}$ von mindestens 20 Mikrometer, vorteilhafterweise ungefähr 50 Mikrometer definiert ist.

**23.** Verwendung einer Zusammensetzung gemäß einem der Ansprüche 1 bis 18 für Beschichtungen und insbesondere als Anstrich.

**24.** Beschichtung erhältlich durch die Verwendung der Zusammensetzung gemäß einem der Ansprüche 1 bis 18.

**25.** Matte oder satinierte Beschichtung gemäß Anspruch 24, **dadurch gekennzeichnet, daß** sie eine Welligkeit zeigt, die im Mittel auf einem Abschnitt senkrecht zur Oberfläche einen Höhenunterschied von 0,2 bis 5 μm aufweist.

**26.** Matte oder satinierte Beschichtung gemäß einem der Ansprüche 24 und 25, **dadurch gekennzeichnet, daß** sie eine Welligkeit zeigt, die eine statistische Dichte von ungefähr 5 bis 500 "Wellen" je Millimeter aufweist.

**27.** Matte oder satinierte Beschichtung gemäß einem der Ansprüche 24 bis 26, **dadurch gekennzeichnet, daß** sie Krater zeigt, die auf der Oberfläche 1/20 bis 1/3 der Fläche ausmachen.

**28.** Matte oder satinierte Beschichtung gemäß einem der Ansprüche 24 bis 27, **dadurch gekennzeichnet, daß** die Hälfte der Fläche der Kraterfläche auf Krater zurückzuführen ist, deren Durchmesser mindestens 1 und höchstens 6 μm (Mikrometer) beträgt.